# EUROPEAN PATENT APPLICATION

(11) **EP 4 213 238 A1**
(43) Date of publication of application: **19.07.2023**
(21) Application number: 21866957.0
(22) Date of filing: 22.06.2021
(51) Int. Cl.: H01M 4/133, H01M 4/62, H01M 4/587, H01M 10/0562, H01M 10/0585, H01M 10/0525

(54) **ALL-SOLID-STATE BATTERY**

(30) Priority: 09.09.2020 KR 20200115636
(71) Applicant: Samsung SDI Co., Ltd., Yongin-si, Gyeonggi-do 17084 (KR)
(72) Inventor: JUNG, Yunchae, Yongin-si Gyeonggi-do 17084 (KR); KIM, Jinkyu, Yongin-si Gyeonggi-do 17084 (KR); YANG, Jinhoon, Yongin-si Gyeonggi-do 17084 (KR); CHO, Byeonggyu, Yongin-si Gyeonggi-do 17084 (KR); KIM, Hongjeong, Yongin-si Gyeonggi-do 17084 (KR); HAN, Sangil, Yongin-si Gyeonggi-do 17084 (KR)
(74) Representative: Gulde & Partner
(86) International application number: PCT/KR2021/007810
(87) International publication number: WO 2022/055086

(57) **Abstract**

The present invention relates to an all-solid-state battery including: an electrode assembly including a negative electrode, a positive electrode, and a solid electrolyte between the negative electrode and the positive electrode; and a case for accommodating the electrode assembly, wherein the negative electrode includes a negative electrode current collector and a negative electrode active material layer including a negative electrode active material and a binder, the negative electrode active material includes a carbon-based material and metal particles, the binder includes a first polymer of a butadiene rubber, and a second polymer selected from carboxy alkyl cellulose (wherein alkyl is a C1 to C6 alkyl), a salt thereof, and a combination thereof, and the first polymer and the second polymer are included in a weight ratio of 1:1 to 6:1.

## Description

### [Technical Field]

An all-solid-state battery is disclosed.

### [Background Art]

In recent years, since electronic devices using batteries such as mobile phones, notebook computers, electric vehicles, and the like are rapidly spreading, a demand for rechargeable batteries, which are small and light-weighted but have relatively high capacity, also is rapidly increasing. In particular, rechargeable lithium batteries are light-weighted and have high energy density and thus draw attentions as a driving power source for portable devices. Accordingly, research and development for improving performance of the rechargeable lithium batteries are being actively conducted.

Among the rechargeable lithium batteries, an all-solid-state battery using a solid electrolyte has advantages of excellent safety due to no risk of electrolyte leakage and easy manufacture into a thin battery.

However, the rechargeable lithium battery using the solid electrolyte has a problem of low ion conductivity and particularly, deterioration of output characteristics at a low temperature, compared with a lithium ion battery using a liquid electrolyte. In addition, the solid electrolyte, compared with the liquid electrolyte, has insufficient surface close contacting property with active materials and thus increases interface resistance, and since the solid electrolyte is distributed without contacting the active materials, there is a problem of deteriorating output characteristics or capacity characteristics, compared to an amount of the injected active material.

### [Disclosure]

An embodiment provides an all-solid-state battery including an electrode having excellent adhesion of an active material layer to a substrate and low resistance.

An embodiment provides an all-solid-state battery including an electrode assembly including a negative electrode, a positive electrode, and a solid electrolyte between the negative electrode and the positive electrode, and a case for accommodating the electrode assembly, wherein the negative electrode includes a negative electrode current collector and a negative electrode active material layer including a negative electrode active material and a binder, the negative electrode active material includes a carbon-based material and metal particles, the binder includes a first polymer of a butadiene rubber, and a second polymer selected from carboxy alkyl cellulose (wherein alkyl is a C1 to C6 alkyl), a salt thereof, and a combination thereof, and the first polymer and the second polymer are included in a weight ratio of 1:1 to 6:1.

The metal particles may be any one selected from Ag, Zn, Al, Sn, Mg, Ge, Cu, In, Ni, Bi, Au, Si, Pt, Pd, and a combination thereof.

The metal particles may have a size of 5 nm to 800 nm.

The carbon-based material may be non-graphitic carbon.

The non-graphitic carbon may have a secondary particle form in which a plurality of primary particles are agglomerated.

The primary particle may have a particle diameter of 20 nm to 100 nm.

The non-graphitic carbon may be any one selected from carbon black, activated carbon, acetylene black, denka black, ketjen black, and a combination thereof.

The binder may be included in an amount of 0.01 to 40 parts by weight based on 100 parts by weight of the negative electrode active material.

The first polymer of the butadiene rubber may be any one selected from a styrene butadiene rubber (SBR), a nitrile butadiene rubber (NBR), an acrylate butadiene rubber (ABR), a methacrylate butadiene rubber, an acrylonitrile-butadiene-styrene (ABS) rubber, a styrene-butadiene-styrene (SBS) rubber, and a combination thereof.

The solid electrolyte may be a sulfide-based solid electrolyte.

The solid electrolyte may include LiₐM_{b}P_{c}S_{d}Aₑ (wherein a, b, c, d, and e are all 0 or more and 12 or less, M is Ge, Sn, Si, or a combination thereof, and A is one of F, Cl, Br, or I).

There may be no solid electrolyte present in the negative electrode.

The negative electrode may have an electrode plate binding force of 10 gf/mm or more.

The negative electrode may further include a lithium precipitation layer formed by precipitating lithium between the negative electrode current collector and the negative electrode active material layer during charging.

The lithium precipitation layer may have a thickness of 10 µm to 50 µm.

The all-solid-state battery may further include a buffer material between the negative electrode and the case.

The all-solid-state battery has improved battery performance by including an electrode having excellent adhesion of the active material layer to the substrate and low resistance.

### [Description of the Drawings]

FIG. 1 is a schematic cross-sectional view of an all-solid-state battery according to an embodiment.
FIG. 2 is a schematic cross-sectional view of an all-solid-state battery during charging.
FIG. 3 is a graph showing the results of measuring capacity retention rates compared to the initial discharge capacity of the all-solid-state battery cells according to Examples 1, 2, and 4 and Comparative Example 1.
FIG. 4 is a graph showing the results of measuring the cycle-life of the all-solid-state battery cells according to Examples 1 and 2 and Comparative Example 1.

### [Mode for Invention]

Hereinafter, embodiments of the present invention will be described in detail. However, this is presented as an example, and thus the present invention is not limited and the present invention is only defined by the scope of the claims to be described later.

As used herein, when specific definition is not otherwise provided, it will be understood that when an element such as a layer, film, region, or substrate is referred to as being "on" another element, it can be directly on the other element or intervening elements may also be present.

In the present invention, the "particle size" or "particle diameter" may be defined as the average particle diameter (D50) based on about 50% of the volume cumulative amount in the particle size-distribution curve. The particle diameter may be, for example, measured by an electron microscopy examination using a scanning electron microscopy (SEM) or a field emission scanning electron microscopy (FE-SEM), or a laser diffraction method. It may be measured by the laser diffraction method as follows. The particles to be measured are dispersed in a dispersion medium and then introduced into a commercially available laser diffraction particle size measuring apparatus (for example, MT 3000 of Microtrac), ultrasonic waves of about 28 kHz are irradiated with an output of about 60 W, and an average particle diameter (D50) in 50% reference of the particle size distribution in a measuring apparatus may be calculated.

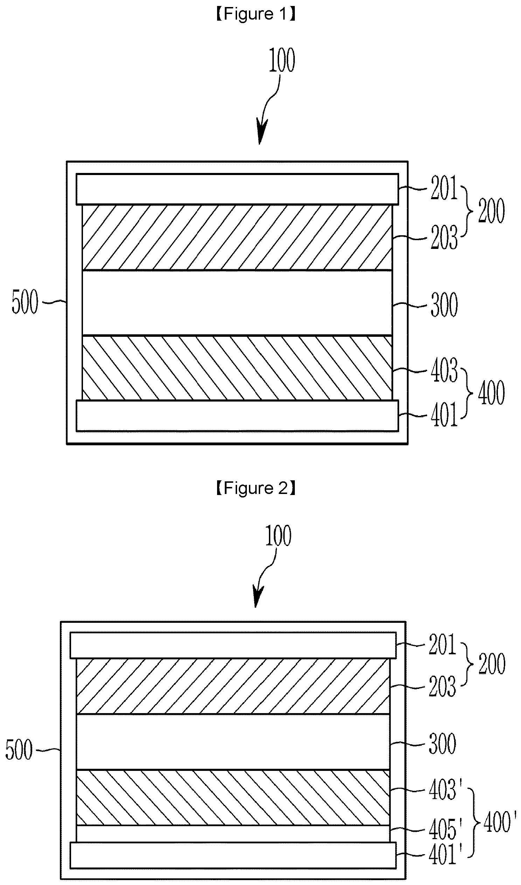

Hereinafter, an all-solid-state battery will be described with reference to FIG. 1. FIG. 1 is a cross-sectional view of an all-solid-state battery according to an embodiment.

Referring to FIG. 1, an all-solid-state battery 100 may be manufactured by accommodating an electrode assembly in which a negative electrode 400 including a negative electrode current collector 401 and a negative electrode active material layer 403, a solid electrolyte layer 300, and a positive electrode 200 including a positive electrode active material layer 203 and a positive electrode current collector 201 are stacked, in a case 500. Although one electrode assembly including the negative electrode 400, the solid electrolyte layer 300, and the positive electrode 200 is illustrated in FIG. 1, an all-solid-state battery may be manufactured by stacking two or more electrode assemblies.

The negative electrode active material layer 403 includes a negative electrode active material and a binder. The negative electrode active material includes a carbon-based material and metal particles.

The carbon-based material may be both crystalline carbon and non-graphitic carbon, and is not limited to specific carbon. In an embodiment, non-graphitic carbon may be desirable as the carbon-based material. The non-graphitic carbon means that the d₀₀₂ value of the carbon-based material, measured by X-ray diffraction intensity (XRD), exceeds 0.337 nm.

The crystalline carbon may be any one selected from natural graphite, artificial graphite, mesophase carbon microbeads, and a combination thereof, and the non-graphitic carbon may be any one selected from carbon black, activated carbon, acetylene black, denka black, ketjen black and a combination thereof. An example of the carbon black is Super P (TIMCAL Co.).

The non-graphitic carbon has a secondary particle form in which a plurality of primary particles are agglomerated, and the primary particles may have a particle diameter of 20 nm to 100 nm, and the secondary particles may have a particle diameter of 1 µm to 20 µm.

In an embodiment, the particle diameter of the primary particles may be 20 nm or more, 30 nm or more, 40 nm or more, 50 nm or more, 60 nm or more, 70 nm or more, 80 nm or more, or 90 nm or more, and 100 nm or less, 90 nm or less nm or less, 80 nm or less, 70 nm or less, 60 nm or less, 50 nm or less, 40 nm or less, 30 nm or less, or 20 nm or less.

In an embodiment, the particle diameter of the secondary particles may be 1 µm or more, 3 µm or more, 5 µm or more, 7 µm or more, 10 µm or more or 15 µm or more, and 20 µm or less, 15 µm or less, 10 µm or less, 7 µm or less, 5 µm or less, or 3 µm or less.

The shape of the primary particle may be spherical, elliptical, plate-shaped, and a combination thereof, and in an embodiment, the shape of the primary particle may be spherical, elliptical, and a combination thereof.

The metal particles may be any one selected from Ag, Zn, Al, Sn, Mg, Ge, Cu, In, Ni, Bi, Au, Si, Pt, Pd, and a combination thereof. Electrical conductivity of the electrode plate may be improved by using the metal particles as a negative electrode active material. In an embodiment, the metal particles may desirably be Ag.

The metal particles may have a size of 5 nm to 800 nm. The size of the metal particles may be 5 nm or more, 50 nm or more, 100 nm or more, 150 nm or more, 200 nm or more, 250 nm or more, 300 nm or more, 350 nm or more, 400 nm or more, 450 nm or more, 500 nm or more, 550 nm or more, 600 nm or more, 650 nm or more, 700 nm or more, or 750 nm or more. In addition, the size of the metal particles may be 800 nm or less, 750 nm or less, 700 nm or less, 650 nm or less, 600 nm or less, 550 nm or less, 500 nm or less, 450 nm or less, 400 nm or less, 350 nm or less, 300 nm or less, 250 nm or less, 200 nm or less, 150 nm or less, 100 nm or less, or 50 nm or less. When the size of the metal particles is within the above range, battery characteristics (e.g., cycle-life characteristics) of the all-solid-state battery may be improved.

The negative electrode active material may include the carbon-based material and the metal particles in a weight ratio of 1:1 to 99:1. For example, the weight of the carbon-based material may be 1 or more, 2 or more, 3 or more, 4 or more, 5 or more, 10 or more, 15 or more, 20 or more, 25 or more, 30 or more, 35 or more, 40 or more, 45 or more, 50 or more, 55 or more, 60 or more, 65 or more, 70 or more, 75 or more, 80 or more, 85 or more, 90 or more, or 95 or more and 99 or less, 95 or less, 90 or less, 85 or less, 80 or less; 75 or less, 70 or less, 65 or less, 60 or less, 55 or less, 50 or less, 45 or less, 40 or less, 35 or less, 30 or less, 25 or less, 20 or less, 15 or less, 10 or less, 5 or less, 4 or less, 3 or less, or 2 or less, relative to that of the metal particles. For example, the weight ratio of the carbon-based material to the metal particles may be 1:1 to 5:1, 1:1 to 10:1, 1:1 to 20:1, 1:1 to 30:1, 1:1 to 40 :1, 1:1 to 50:1, 1:1 to 60:1, 1:1 to 70:1, 1:1 to 80:1, or 1:1 to 90:1. When the carbon-based material and the metal particles are included in the above weight ratio, electrical conductivity of the all-solid-state electrode plate may be improved. In an embodiment, the weight ratio may be 3:1.

Since conventional all-solid-state batteries often introduce highly reactive solid electrolytes into electrode plates, it is difficult to manufacture electrode plates by applying an aqueous binder and thus, unlike conventional lithium ion batteries, a non-aqueous binder such as PVDF has been mainly used. However, since the non-aqueous binder has low conductivity, electrode materials surrounded by the non-aqueous binder have a problem in that lithium ion conductivity and electrical conductivity are low.

In order to solve this problem, an embodiment provides a negative electrode 400 including a carbon-based material, metal particles, and a specific binder by excluding the solid electrolyte in the electrode plate of the negative electrode 400. Since the solid electrolyte is not included in the negative electrode 400, electrical conductivity is excellent, high adhesion and low electrical resistance may be secured, and thus the characteristics of an all-solid-state battery can be improved.

The binder may include a first polymer of butadiene-based rubber and a second polymer selected from carboxyalkyl cellulose, a salt thereof, and a combination thereof. The binder improves dispersibility of the negative electrode active materials in the composition (slurry) for forming the negative electrode active material layer, has strong adhesion to reduce a content of the binder, and increases a content of the negative electrode active material to increase the capacity of an all-solid-state battery. In addition, by increasing the structural stability of the negative electrode 400, overall characteristics of the battery may be improved.

The butadiene-based rubber may include a substituted alkylene structural unit and a butadiene-derived structural unit, and may be any one selected from a styrene butadiene rubber (SBR), a nitrile butadiene rubber (NBR), an acrylate butadiene rubber (ABR), a methacrylate butadiene rubber, an acrylonitrile-butadiene-styrene (ABS) rubber, a styrene-butadiene-styrene (SBS) rubber, and a combination thereof.

The butadiene-based rubber may include the substituted alkylene structural unit and the butadiene-derived structural unit in a molar ratio of 1:1 to 3:1. For example, the molar ratio may be 1:1 to 1.5:1, 1:1 to 2:1, or 1:1 to 2.5:1. When the molar ratio of the butadiene-based rubber is within the above range, an effect of improving adhesion and structural stability of the negative electrode may be improved.

The substituted alkylene structural unit may be derived from a substituted or unsubstituted styrene-based monomer, and specific examples of the substituted or unsubstituted styrene-based monomer may include styrene, α-methylstyrene, 3-methylstyrene, 4-methyl styrene, 2,4-dimethylstyrene, 2,5-dimethylstyrene, 2-methyl-4-chlorostyrene, 2,4,6-trimethylstyrene, cis-β-methylstyrene, trans-β-methylstyrene, 4-methyl-α-methylstyrene, 4-fluoro-α-methylstyrene, 4-chloro-α-methylstyrene, 4-bromo-α-methylstyrene, 4-t-butylstyrene, 2-fluorostyrene, 3-fluoro styrene, 4-fluorostyrene, 2,4-difluorostyrene, 2,3,4,5,6-pentafluorostyrene, 2-chlorostyrene, 3-chlorostyrene, 4-chlorostyrene, 2,4 -dichlorostyrene, 2,6-dichlorostyrene, octachlorostyrene, 2-bromostyrene, 3-bromostyrene, 4-bromostyrene, 2,4-dibromostyrene, α-bromostyrene, β- bromostyrene, or a combination thereof.

In another embodiment, the substituted alkylene structural unit may be derived from a substituted or unsubstituted nitrile-based monomer, and specific examples of the substituted or unsubstituted nitrile-based monomer may include acrylonitrile, methacrylonitrile, maronitrile, α-chloronitrile, α-cyanoethyl acrylonitrile, or a combination thereof.

The butadiene-derived structural unit may be a structural unit derived from a butadiene monomer, and specific examples of the butadiene monomer may include 1,3-butadiene, isoprene, 2,3-dimethyl-1,3-butadiene, 2-ethyl-1,3-butadiene, or a combination thereof.

The second polymer is selected from carboxy alkyl cellulose, a salt thereof, and a combination thereof. The alkyl of the carboxy alkyl cellulose may be lower alkyl C1 to C6 alkyl. In an embodiment, the carboxy alkyl cellulose may be carboxy methyl cellulose (CMC) or a salt thereof.

The carboxyalkyl cellulose has high viscosity and imparts excellent coating properties, and at the same time contributes to improving adhesive strength, thereby preventing the active materials from being detached from the current collector and exhibiting excellent cycle characteristics. In addition, since the alkyl group of the carboxyalkyl cellulose is a lower alkyl group, the carboxyalkyl cellulose has high water solubility and thus is suitable for manufacturing a water-based electrode.

More specifically, the carboxy methyl cellulose may have a molecular weight (Mw) of 100,000 to 4,000,000. When the molecular weight is within the above range, the attraction between each polymer is improved to evenly disperse the negative electrode active material, the adhesive strength of the active material is also improved to improve cycle-life characteristics, and the viscosity of the slurry is suitable for coating to improve productivity of the electrode.

The first polymer and the second polymer of the binder may be included in the negative electrode in a weight ratio of 1:1 to 6:1. The weight of the first polymer is 1.1 or more, 1.2 or more, 1.3 or more, 1.4 or more, 1.5 or more, 1.6 or more, 1.7 or more, 1.8 or more, 1.9 or more, 2.0 or more, 2.1 or more, 2.2 or more, or 2.3 with respect to the second polymer. 2.4 or more, 2.5 or more, 2.6 or more, 2.7 or more, 2.8 or more, 2.9 or more, or 3.0 or more and 5 or less, 4.9 or less, 4.8 or less, 4.7 or less, 4.6 or less, 4.5 or less, 4.4 or less, 4.3 or less, 4.2 or less , 4.1 or less, 4.0 or less, 3.9 or less, 3.8 or less, 3.7 or less, 3.6 or less, 3.5 or less, 3.4 or less, 3.3 or less, 3.2 or less, 3.1 or less, or 3.0 or less. In an embodiment, the weight ratio of the first polymer and the second polymer of the binder may be 1:1 to 5:1 or 1:1 to 6:1.

When the first polymer and the second polymer are included in the above weight ratio, the binder may impart appropriate flexibility to the electrode layer to prevent cracking of the electrode layer and increase the adhesiveness of the surface of the electrode layer. On the other hand, when the first polymer and the second polymer are present in a range exceeding the above range, the rigidity of the electrode may be deteriorated.

The binder may be included in an amount of 0.01 to 40 parts by weight based on 100 parts by weight of the negative electrode active material. The binder may be included in an amount of 1 to 15 parts by weight based on 100 parts by weight of the negative electrode active material. For example, the binder may be included in an amount of 1 part by weight or more, 2 parts by weight or more, 3 parts by weight or more, 4 parts by weight or more, 5 parts by weight or more, 6 parts by weight or more, 7 parts by weight or more, 8 parts by weight or more, 9 parts by weight or more, 10 parts by weight or more, 11 parts by weight or more, 12 parts by weight or more, 13 parts by weight or more, or 14 parts by weight or more, and 15 parts by weight or less, 14 parts by weight or less, 13 parts by weight or less, 12 parts by weight or less, 11 parts by weight or less, 10 parts by weight or less, 9 parts by weight or less, 8 parts by weight or less, 7 parts by weight or less, 6 parts by weight or less, 5 parts by weight or less, 4 parts by weight or less, 3 parts by weight or less, or 2 parts by weight or less.

When the binder is included in the negative electrode 400 of the all-solid-state battery 100 in the above content range, electrical resistance and adhesive strength may be improved, thereby improving characteristics (battery capacity and output characteristics) of the all-solid-state battery.

Additives such as a conductive material, a filler, a dispersant, and an ion conductive material may be appropriately mixed with the negative electrode active material layer 403, in addition to the aforementioned negative electrode active material and binder. Examples of the conductive material that can be included in the negative electrode active material layer 403 may include graphite, carbon black, acetylene black, ketjen black, a carbon fiber, and a metal powder. In addition, known materials generally used in all-solid-state batteries may be used as a filler, a dispersant, an ion conductive material, and the like that can be included in the negative electrode active material layer 403.

The negative electrode active material layer 403 may be formed on the negative electrode current collector 401. Examples of the negative electrode current collector 401 may include plate-like bodies, thin bodies, etc. made of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The negative electrode current collector 401 may be omitted.

The negative electrode 400 may have an electrode plate electrical resistance of 5.0 · 10⁻² ohm·cm or less. For example, the negative electrode may have an electrode plate electrical resistance of 5.0 · 10⁻² ohm·cm or less, 4.9 · 10⁻² ohm cm or less, 4.8 · 10⁻² ohm cm or less, 4.7 · 10⁻² ohm cm or less, 4.6 · 10⁻² ohm cm or less, 4.5 · 10⁻² ohm cm or less, 4.4 · 10⁻² ohm cm or less, 4.3 · 10⁻² ohm cm or less, 4.2 · 10⁻² ohm cm or less, 4.1 · 10⁻² ohm·cm or less, or 4.0 · 10⁻² ohm·cm or less. Since the negative electrode has a low electrode plate electrical resistance of 5.0 · 10⁻² ohm·cm or less, the electrical conductivity of the electrode plate is increased, and thus the characteristics of the all-solid-state battery may be improved.

The negative electrode 400 may have a negative electrode plate binding force of 10 gf/mm or more. For example, the negative electrode may have a negative electrode plate binding force of 10 gf/mm or more, 20 gf/mm or more, 30 gf/mm or more, 40 gf/mm or more, 50 gf/mm or more, 60 gf/mm or more, 70 gf/mm or more, 80 gf/mm or more, or 90 gf/mm or more. Since the negative electrode has a high negative electrode plate binding force of 10 gf/mm or more, the stability of the electrode plate increases, and thus the characteristics of the all-solid-state battery may be improved.

The all-solid-state battery 100 may exhibit high characteristics in a wider temperature range by including the solid electrolyte layer 300. The solid electrolyte layer 300 includes a solid electrolyte. The solid electrolyte included in the solid electrolyte layer 300 may be an inorganic solid electrolyte such as a sulfide-based solid electrolyte or an oxide-based solid electrolyte or a solid polymer electrolyte.

In an embodiment, the solid electrolyte may be a sulfide-based solid electrolyte having excellent ion conductivity, and the solid electrolyte may be LiₐM_{b}P_{c}S_{d}Aₑ (wherein a, b, c, d, and e are all 0 or more and 12 or less, M is Ge, Sn, Si, or a combination thereof, and A is one of F, Cl, Br, or I), and specifically, Li₃PS₄, Li₇P₃S₁₁, LiePSsC!, and the like. For example, x may be 0 to 7. The higher the ionic conductivity of the sulfide-based solid electrolyte used in the all-solid-state battery, the better, but the ionic conductivity may be at least 10⁻⁴ to 10⁻² S/cm. Within this range, the charge/discharge capacity may be improved.

The sulfide-based solid electrolyte may be obtained by mixing Li₂S and P₂S₅ at a mixing ratio of 50:50 to 80:20. Within the above mixing ratio range, a sulfide-based solid electrolyte having desirable ionic conductivity may be provided. Ionic conductivity may be further improved by including SiS₂, GeS₂, B₂S₃, etc. as other components. The sulfide solid electrolyte may be amorphous or crystalline, but it is desirable to use an amorphous sulfide-based solid electrolyte having good contact properties with the active materials.

As a mixing method, mechanical milling or a solution method may be applied. Mechanical milling is a method in which the aforementioned starting materials and a ball mill are put into a reactor and vigorously stirred to micronize and mix the starting materials. In the case of using the solution method, a solid electrolyte may be obtained as a precipitate by mixing the starting materials in a solvent. In addition, firing may be performed additionally. Crystals of the solid electrolyte may become more robust when additional firing is performed.

The all-solid-state battery 100 includes a positive electrode 200 including a positive electrode active material layer 203 and a positive electrode current collector 201. The positive electrode active material layer 203 may include a positive electrode active material. The positive electrode active material may be desirably a positive electrode active material capable of reversibly intercalating and deintercalating lithium ions. For example, the positive electrode active material may be at least one composite oxides of lithium and a metal selected from cobalt, manganese, nickel, and a combination thereof and specific examples may include a compound represented by any one of LiₐA₁-_{b}B¹_{b}D¹₂ (wherein, in the chemical formula, 0.90 ≤ a ≤ 1.8, and 0 ≤ b ≤ 0.5); LiₐE_{1-b}B¹ _{b}O_{2-c}D¹_{c} (wherein, in the chemical formula, 0.90 ≤ a ≤ 1.8, 0 ≤ b ≤ 0.5, 0 ≤ c ≤ 0.05); LiE_{2-b}B¹_{b}O_{4-c}D¹_{c} (wherein, in the chemical formula, 0 ≤ b ≤ 0.5, 0 ≤ c ≤ 0.05); LiₐNi_{1-b-c}Co_{b}B¹_{c}D¹_{α} (wherein, in the chemical formula, 0.90 ≤ a ≤ 1.8, 0 ≤ b ≤ 0.5, 0 ≤ c ≤ 0.05, 0 < α ≤ 2); LiₐNi_{1-b-c}Co_{b}B¹_{c}O_{2-α}F¹_{α} (wherein, in the chemical formula, 0.90 ≤ a ≤ 1.8, 0 ≤ b ≤ 0.5, 0 ≤ c ≤ 0.05, 0 < α < 2); LiₐNi_{1-b-c}Co_{b}B¹_{c}O_{2-α}F¹₂ (wherein, in the chemical formula, 0.90 ≤ a ≤ 1.8, 0 ≤ b ≤ 0.5, 0 ≤ c ≤ 0.05, 0 < α < 2); LiₐNi_{1-b-c}Mn_{b}B¹_{c}D¹_{α} (wherein, in the chemical formula, 0.90 ≤ a ≤ 1.8, 0 ≤ b ≤ 0.5, 0 ≤ c ≤ 0.05, 0 < α ≤ 2); LiₐNi_{1-b-c}Mn_{b}B¹_{c}O_{2-α}F¹_{α} (wherein, in the chemical formula, 0.90 ≤ a ≤ 1.8, 0 ≤ b ≤ 0.5, 0 ≤ c ≤ 0.05, 0 < α < 2); LiₐNi_{1-b-c}Mn_{b}B¹_{c}O_{2-α}F¹₂ (wherein, in the chemical formula, 0.90 ≤ a ≤ 1.8, 0 ≤ b ≤ 0.5, 0 ≤ c ≤ 0.05, 0 < α < 2); LiₐNi_{b}E_{c}G_{d}O₂ (wherein, in the chemical formula, 0.90 ≤ a ≤ 1.8, 0 ≤ b ≤ 0.9, 0 ≤ c ≤ 0.5, 0.001 ≤ d ≤ 0.1); LiₐNi_{b}Co_{c}Mn_{d}GeO₂ (wherein, in the chemical formula, 0.90 ≤ a ≤ 1.8, 0 ≤ b ≤ 0.9, 0 ≤ c ≤ 0.5, 0 ≤ d ≤0.5, 0.001 ≤ e ≤ 0.1); LiₐNiG_{b}O₂ (wherein, in the chemical formula, 0.90 ≤ a ≤ 1.8, 0.001 ≤ b ≤ 0.1); LiₐCoG_{b}O₂ (wherein, in the chemical formula, 0.90 ≤ a ≤ 1.8, 0.001 ≤ b ≤ 0.1); LiₐMnG_{b}O₂ (wherein, in the chemical formula, 0.90 ≤ a ≤ 1.8, 0.001 ≤ b ≤ 0.1); LiₐMn₂G_{b}O₄ (wherein, in the chemical formula, 0.90 ≤ a ≤ 1.8, 0.001 ≤ b ≤ 0.1); QO₂; QS₂; LiQS₂; V₂O₅; LiV₂O₅; LiI¹O₂; LiNiVO₄; Li_{(3-f)}J₂(PO₄)₃ (0 ≤ f ≤ 2); Li_{(3-f})Fe₂ (PO₄)₃ (0 ≤ f ≤ 2); and LiFePO₄:

in the above chemical formulas, A is Ni, Co, Mn, or a combination thereof; B¹ is Al, Ni, Co, Mn, Cr, Fe, Mg, Sr, V, a rare earth element, or a combination thereof; D¹ is O, F, S, P, or a combination thereof; E is Co, Mn, or a combination thereof; F¹ is F, S, P, or a combination thereof; G is Al, Cr, Mn, Fe, Mg, La, Ce, Sr, V, or a combination thereof; Q is Ti, Mo, Mn, or a combination thereof; I¹ is Cr, V, Fe, Sc, Y, or a combination thereof; and J is V, Cr, Mn, Co, Ni, Cu, or a combination thereof.

For example, the positive electrode active material may be formed using lithium oxide such as lithium cobalt oxide (hereinafter referred to as LCO), lithium nickel oxide, lithium nickel cobalt oxide, lithium nickel cobalt aluminum oxide (hereinafter referred to as NCA), lithium nickel cobalt manganese oxide (hereinafter referred to as NCM), nickel sulfide, copper sulfide, sulfur, iron oxide, vanadium oxide, or the like. These positive electrode active materials may be used alone or in combination of two or more.

In addition, a lithium salt of a transition metal oxide having a layered rock salt structure may be used as a positive electrode active material. Here, "layered" refers to a thin layered shape. In addition, "rock salt structure" refers to a sodium chloride-type structure, which is one type of crystal structure, and specifically, a structure in which face-centered cubic lattices formed by cations and anions, respectively are displaced from each other by only 1/2 of the edge of the unit lattice.

Examples of transition metal composite oxides having such a layered rock salt structure may include ternary lithium transition metal oxides such as LiNiₓCo_{y}Al_{z}O₂(NCA), LiNiₓCo_{y}Mn_{z}O₂(NCM) (where 0<x<1, 0<y<1, 0<z<1, and x+y+z=1), etc.

Energy density and thermal stability of the all-solid-state battery 100 may be improved when the positive electrode active material includes the ternary lithium transition metal composite oxide having the layered rock salt structure.

The positive electrode active material may be covered with a coating layer. The coating layer may be applied as long as it is known as a coating layer of a positive electrode active material of an all-solid-state battery. Examples of the covering layer include Li₂O-ZrO₂ and the like.

In addition, when the positive electrode active material is formed of a ternary lithium transition metal composite oxide such as NCA or NCM, and nickel (Ni) is included as the positive electrode active material, the capacity density of the all-solid-state battery 100 is increased and elution of metal from the positive electrode active material in a charged state may be reduced. Thereby, the all-solid-state battery 100 may improve long-term reliability and cycle characteristics in a charged state.

Herein, examples of the shape of the positive electrode active material may include particle shapes such as spherical and elliptical spheres. In addition, an average particle diameter of the positive electrode active material is not particularly limited, and may be within a range applicable to the positive electrode active material of an existing all-solid-state rechargeable battery. Also, a content of the positive electrode active material in the positive electrode active material layer 203 is not particularly limited, and may be within a range applicable to the positive electrode layer of an existing all-solid-state rechargeable battery.

The positive electrode active material layer 203 may further include a solid electrolyte. The solid electrolyte included in the positive electrode layer may be the same as or different from the solid electrolyte included in the solid electrolyte layer 300. The solid electrolyte may be included in an amount of 10 to 30 wt% based on the total weight of the positive electrode layer.

The positive electrode active material layer 203 may be formed on the positive electrode current collector 201. At this time, the positive electrode active material layer 203 may be formed on the positive electrode current collector 201 by a dry or wet coating method. Examples of the positive electrode current collector 201 may include plate-like bodies, thin bodies, etc. made of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The positive electrode current collector 201 may be omitted.

In addition, additives such as a conductive material, a binder, a filler, a dispersant, and an ion conductive material may be properly mixed in the positive electrode active material layer 203 in addition to the positive electrode active material and the solid electrolyte.

As the filler, dispersant, and ion conductive material that can be included in the positive electrode active material layer 203, the same additives as those used in the aforementioned negative electrode active material layer 403 may be used. In this case, the conductive material may be present in an amount of 1 to 10 wt% based on the total weight of the positive electrode active material layer 203. The binder that can be included in the positive electrode active material layer 203 may include, for example, a styrene butadiene rubber (SBR), polytetrafluoroethylene, polyvinylidene fluoride, polyethylene, and the like.

The negative electrode 400 may have a thickness of 1 µm to 30 µm. For example, the thickness of the negative electrode 400 may be 1 µm or more, 5 µm or more, 10 µm or more, 15 µm or more, 20 µm or more, or 25 µm or more and 25 µm or less, 20 µm or less, 15 µm or less, 10 µm or less, or 5 µm or less. As described above, since the thickness of the negative electrode 400 is thin, cycle-life of the all-solid-state battery may be improved and energy density may also be increased.

The positive electrode 200 may have a thickness of 100 µm to 200 µm. For example, the thickness of the positive electrode 200 may be 100 µm or more, 110 µm or more, 120 µm or more, 130 µm or more, 140 µm or more, 150 µm or more, 160 µm or more, 170 µm or more, 180 µm or more, or 190 µm or more and 200 µm or less, 190 µm or less, 180 µm or less, 170 µm or less, 160 µm or less, 150 µm or less, 140 µm or less, 130 µm or less, 120 µm or less, or 110 µm or less. As described above, since the thickness of the positive electrode 200 is greater than that of the negative electrode 400, the capacity of the positive electrode 200 is greater than the capacity of the negative electrode 400.

A thickness ratio of the positive electrode 200 to the negative electrode 400 may be 3 to 200. For example, the thickness ratio of the positive electrode 200 to the negative electrode 400 may be 3 or more, 5 or more, 7 or more, 10 or more, 20 or more, 30 or more, 40 or more, 50 or more, 100 or more, or 150 or more. and 200 or less, 150 or less, 100 or less, 50 or less, 40 or less, 30 or less, 20 or less, 10 or less, 7 or less, or 5 or less. In an embodiment, the thickness ratio of the positive electrode 200 to the negative electrode 400 may be 3 to 10.

When the battery is charged, the negative electrode and the positive electrode may expand and the thicknesses of the negative electrode and the positive electrode may be increased. When the thickness of the negative electrode increases, the negative electrode may further include a lithium precipitation layer. An all-solid-state battery having such a structure will be described with reference to FIG. 2. FIG. 2 is a schematic cross-sectional view of an all-solid-state battery during charging. In FIG. 2, the same reference numerals as those in FIG. 1 are applied to the same components as those previously described, and descriptions thereof will be omitted. Referring to FIG. 2, the negative electrode 400' of the all-solid-state battery 100 further includes a lithium precipitation layer 405' formed between the negative electrode current collector 401' and the negative electrode active material layer 403'. A lithium precipitation layer 405' may be formed due to lithium moving from the positive electrode 200 to the negative electrode 400' during charging, and the safety and cycle-life of the all-solid-state battery is increased through the lithium precipitation layer 405'.

The lithium deposition layer 405' may have a thickness of 10 µm to 50 µm. For example, the lithium precipitation layer 405' may have a thickness of 10 µm or more, 20 µm or more, 30 µm or more, or 40 µm or more, and 50 µm or less, 40 µm or less, 30 µm or less, or 20 µm or less. By including the lithium precipitation layer 405', the thickness of the negative electrode 400' after charging may increase by 2 to 5 times. That is, the thickness of the negative electrode after charging may increase by 2 to 5 times compared to the thickness of the negative electrode at the beginning before charging or during discharging.

In an embodiment, the all-solid-state battery 100 may further include a buffer material for buffering a thickness change caused by the lithium deposition layer 405'. The buffer material may be disposed between the negative electrode 400' and the case 500 or on the outer surface of the case 500, and in the case of a battery in which one or more electrode assemblies are stacked, it may be disposed between different electrode assemblies and electrode assemblies.

The buffer material may be a material having an elastic recovery rate of 50% or more and having an insulating function, and specifically, may be a silicone rubber, an acrylic rubber, a fluorine-based rubber, nylon, a synthetic rubber, or a combination thereof. The buffer material may be present in the form of a polymer sheet.

The present invention is explained in more detail through the following examples and comparative examples. However, the examples are for exemplifying the present invention, and the scope of the present invention is not limited only thereto.

### Example 1

### (1) Preparation of positive electrode active material

100 parts by weight of anhydrous 2-propanol, 10 parts by weight of lithium methoxide (a 10% methanol solution), and 0.5 parts by weight of zirconium (IV) tetrapropoxide were mixed to prepare an LZO coating solution. The LZO coating solution was mixed with NCM(LiNi_{0.9}Co_{0.05}Mn_{0.05}O₂) and then, stirred for 1 hour and vacuum-dried at 50 ° C, preparing a positive electrode active material.

### (2) Manufacture of Positive Electrode

The LZO-coated positive electrode active material NCM(LiNi_{0.9}Co_{0.05}Mn_{0.05}O₂), an argyrodite-type solid electrolyte of Li₆PS₅Cl, a conductive material of CNF (Carbon Nano Fiber), and a binder of polytetrafluoroethylene (PTFE) were mixed to prepare a mixture. In the mixture, the positive electrode active material, the solid electrolyte, the conductive material, and the binder had a weight ratio of 85:15:3:1.5.

Subsequently, xylene was added to the mixture, and the obtained mixture was dried in a vacuum chamber at 45° C for 2 hours, manufacturing a 150 µm-thick positive electrode.

### (3) Manufacture of Solid Electrolyte Layer

Isobutyrylisobutyrate (IBIB) as a binder solution was added to argyrodite-type solid electrolyte of Li₆PS₅Cl and then, mixed. Herein, the obtained mixture was stirred with a Thinky mixer to have appropriate viscosity. After adjusting the viscosity, 2 mm zirconia balls were added thereto and then, stirred again with the Thinky mixer, preparing slurry. The slurry was cast on a release PET film and dried at room temperature, forming a solid electrolyte layer.

### (4) Manufacture of Negative Electrode

SBR (styrene butadiene rubber), CMC (sodium carboxymethyl cellulose), and water as a solvent were used, preparing a binder solution. Subsequently, the binder solution, Ag nanoparticles (D50: 60 nm), and carbon black were mixed. Herein, the Ag nanoparticles, the carbon black, SBR, and CMC had a weight ratio of 25:75:6:3.

The mixture was stirred with a Thinky mixer to have appropriate viscosity. After adjusting the viscosity, 2 mm zirconia balls were added thereto and then, stirred again with the Thinky mixer, preparing slurry. The stirred slurry was coated on an SUS foil and vacuum-dried at 100° C, manufacturing a 10 µm-thick negative electrode.

### (5) Manufacture of All-solid-state Battery Cell

The positive electrode of (2) above was cut into a square size of 2.89 cm², the solid electrolyte layer of (3) above was cut into a square size of 4.41 cm², and the negative electrode of (4) above was cut into a square size of 3.61 cm² and then, stacked, manufacturing an all-solid-state battery cell.

### Example 2

An all-solid-state battery cell was manufactured in the same manner as in Example 1 except that the negative electrode was manufactured by using Ag nanoparticles (D50: 60 nm), carbon black, SBR, and CMC in a weight ratio of 25:75:8:4.

### Example 3

An all-solid-state battery cell was manufactured in the same manner as in Example 1 except that the negative electrode was manufactured by using Ag nanoparticles (D50: 60 nm), carbon black, SBR, and CMC in a weight ratio of 25:75:10:5.

### Example 4

An all-solid-state battery cell was manufactured in the same manner as in Example 1 except that the negative electrode was manufactured by using Ag nanoparticles (D50: 60 nm), carbon black, SBR, and CMC in a weight ratio of 25:75:7.5:1.5.

### Example 5

An all-solid-state battery cell was manufactured in the same manner as in Example 1 except that the negative electrode was manufactured by using Ag nanoparticles (D50: 60 nm), carbon black, SBR, and CMC in a weight ratio of 25:75:4.5:4.5.

### Example 6

An all-solid-state battery cell was manufactured in the same manner as in Example 1 except that the negative electrode was manufactured by using Bi nanoparticles instead of the Ag nanoparticles (D50: 60 nm) and then, mixing the Bi nanoparticles (D50: 60 nm), carbon black, SBR, and CMC in a weight ratio of 25:75:6:3.

### Example 7

An all-solid-state battery cell was manufactured in the same manner as in Example 1 except that the negative electrode was manufactured by using Sn nanoparticles instead of the Ag nanoparticles (D50: 60 nm) and then, mixing the Sn nanoparticles (D50: 60 nm), carbon black, SBR, and CMC in a weight ratio of 25:75:6:3.

### Example 8

An all-solid-state battery cell was manufactured in the same manner as in Example 1 except that the negative electrode was manufactured by using Zn nanoparticles instead of the Ag nanoparticles (D50: 60 nm) and then, mixing the Zn nanoparticles (D50: 60 nm), carbon black, SBR, and CMC in a weight ratio of 25:75:6:3.

### Comparative Example 1

An all-solid-state battery cell was manufactured in the same manner as in Example 1 except that the negative electrode was manufactured by using a polymer binder solution prepared by dissolving PVDF (polyvinylidene fluoride) in n-methyl pyrrolidone (NMP) as a binder.

Herein, the Ag nanoparticles (D50: 60nm), carbon black, and PVdF were used in a weight ratio of 25:75:7.

### Comparative Example 2

An all-solid-state battery cell was manufactured in the same manner as in Example 1 except that the negative electrode was manufactured by using Ag nanoparticles (D50: 60 nm), carbon black, SBR, and CMC in a weight ratio of 25:75:8.5:0.5. Herein, the slurry failed in securing viscosity, resultantly failing in manufacturing an electrode plate.

### Comparative Example 3

An all-solid-state battery cell was manufactured in the same manner as in Example 1 except that the negative electrode was manufactured by using Zn nanoparticles instead of the Ag nanoparticles (D50: 60 nm) and then, mixing the Zn nanoparticles (D50: 60 nm), carbon black, SBR, and CMC in a weight ratio of 25:75:3:6. Herein, while dried after the coating, the slurry was detached from the SUS foil, failing in manufacturing an electrode plate.

### Evaluation 1: Measurement of Electrode Plate Electrical Conductivity

Each negative electrode plate according to Examples 1 to 5 and Comparative Examples 1 to 3 was measured with respect to resistance by using a 46 pin multi-point electrode plate resistance meter. Herein, a current was 1 mA, a voltage was 0.7 V, and a SUS foil as a substrate had resistance of 7*10-⁵ ohm · cm.

The measurement results are shown in Table 1.

**(Table 1)**

| | Ex. 1 | Ex. 2 | Ex. 3 | Ex. 4 | Ex. 5 | Comp. Ex. 1 | Comp. Ex. 2 | Comp. Ex. 3 |
|---|---|---|---|---|---|---|---|---|
| Electrode plate resistance (10⁻² ohm - cm) | 4.8 | 4.0 | 4.7 | 4.6 | 4.9 | 5.6 | * | * |

| | | | | | | | | |
|---|---|---|---|---|---|---|---|---|
| *: In Comparative Examples 2 and 3, the resistance value could not be measured because it was impossible to manufacture the electrode plate. | | | | | | | | |

Referring to Table 1, the negative electrode plates using SBR and CMC in a weight ratio of 1:1 to 6:1 as a binder according to Examples 1 to 5 exhibited low resistance of less than or equal to 5.0 · 10⁻² ohm · cm, but the negative electrode plate using PVDF instead of SBR and CMC as a binder according to Comparative Example 1 exhibited high resistance of 5.6 · 10⁻² ohm · cm.

These results exhibit that electrical conductivity of a negative electrode may be improved by using SBR and CMC in a weight ratio of 1:1 to 6:1 for the negative electrode to reduce electrode plate resistance.

### Evaluation 2: Evaluation of Electrode Binding Force

The negative electrode plates according to Examples 1 to 5, 7, and 8 and Comparative Examples 1 to 3 were respectively cut to have a width of 25 mm and then, fixed on a slide glass with a double-sided tape. The fixed negative electrode plate was evaluated with respect to a binding force with a tensile tester (UTM (Universal Testing Machine)). At this time, the negative electrode plate was separated from the slide glass at 180° at a speed of 10 mm/min.

The measurement results are shown in Table 2.

**(Table 2)**

| | Ex. 1 | Ex. 2 | Ex. 3 | Ex. 4 | Ex. 5 | Ex. 7 | Ex. 8 | Comp. Ex. 1 | Comp. Ex. 2 | Comp. Ex. 3 |
|---|---|---|---|---|---|---|---|---|---|---|
| Binding force (gf/mm) | 55.0 | 88.6 | 93.8 | 53.0 | 127.4 | 39.3 | 50.2 | 7.9 | ₋* | ₋* |

| | | | | | | | | | | |
|---|---|---|---|---|---|---|---|---|---|---|
| *: In Comparative Examples 2 and 3, the binding force could not be measured because it was impossible to manufacture the electrode plate. | | | | | | | | | | |

As shown in Table 2, the negative electrode plates using an aqueous binder of SBR and CMC in a weight ratio of 1:1 to 6:1 according to Examples 1 to 5, 7 and 8 exhibited a high binding force of greater than or equal to 39.3 gf/mm, but the negative electrode plate using PVDF instead of SBR and CMC as a binder according to Comparative Example 1 exhibited a low binding force of 7.9 gf/mm.

These results exhibit that a negative electrode using a binder of SBR and CMC in a weight ratio of 1:1 to 6:1 may increase a binding force of an electrode plate, resultantly improving stability of the electrode.

### Evaluation 3: Evaluation of Battery Output Characteristics

The all-solid-state battery cells of Examples 1, 2, and 4 and Comparative Example 1 were charged and discharged to evaluate capacity retention relative to initial discharge capacity. In addition, the cells were charged and discharged at 0.1 C as a 1^{st} cycle, charged at 0.1 C and discharged at 0.33 C as a 2^{nd} cycle, charged at 0.1C and discharged at 1 C as a 3^{rd} cycle at 45° C and then, evaluated with respect to output characteristics

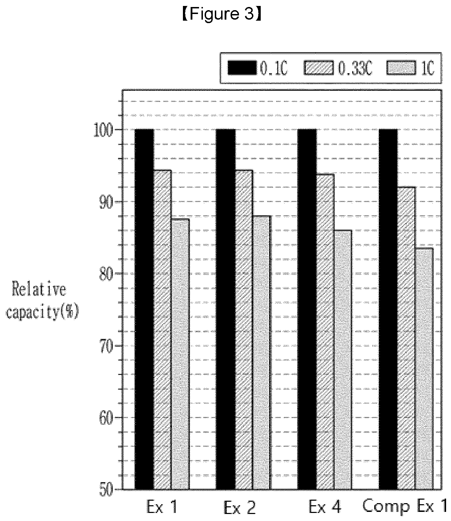

The results are shown in FIG. 3. FIG. 3 is a graph showing capacity retention to initial discharge capacity of the all-solid-state battery cells according to Examples 1, 2, and 4 and Comparative Example 1.

Referring to FIG. 3, the battery cells of Example 1, 2, and 4 using SBR and CMC as a binder in a weight ratio of 1:1 to 6:1 exhibited excellent battery output characteristics, compared with the battery cell of Comparative Example 1 using PVDF as a binder instead of SBR and CMC.

### Evaluation 4: Evaluation of Battery Cycle-life

The battery cells of Examples 1 and 2 and Comparative Example 1 were charged and discharged to evaluate battery cycle-life characteristics. The battery cycle-life characteristics were evaluated by performing the charge and discharge at 0.33 C at 45° C in the battery cycle-life evaluation.

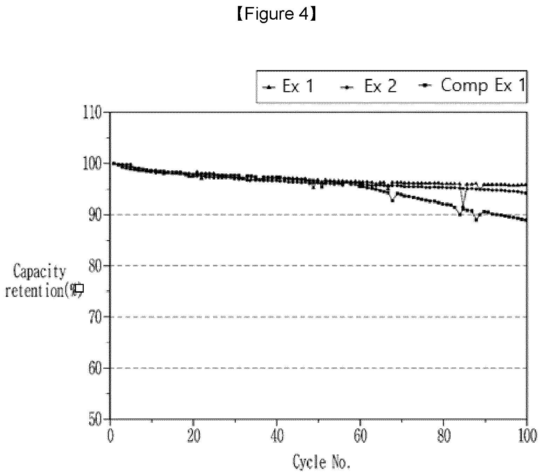

The results are shown in FIG. 4.

Referring to FIG. 4, the battery cells of Examples 1 and 2 using a mixed binder of SBR and CMC in a weight ratio of 1:1 to 6:1 exhibited excellent battery cycle-life, compared with the battery cell of Comparative Example 1 using a PVDF binder instead of SBR and CMC.

While this invention has been described in connection with what is presently considered to be practical example embodiments, it is to be understood that the invention is not limited to the disclosed embodiments, but, on the contrary, is intended to cover various modifications and equivalent arrangements included within the spirit and scope of the appended claims.

### <Description of Symbols>

- 100:: all-solid-state battery
- 200:: positive electrode
- 201:: positive electrode current collector
- 203:: positive electrode active material layer
- 300:: solid electrolyte layer
- 400, 400':: negative electrode
- 401, 401':: negative electrode current collector
- 403, 403':: negative electrode active material layer
- 405':: lithium precipitation layer
- 500:: case

## Claims

1. An all-solid-state battery, comprising
an electrode assembly including a negative electrode, a positive electrode, and a solid electrolyte between the negative electrode and the positive electrode; and
a case for accommodating the electrode assembly
wherein the negative electrode includes a negative electrode current collector and a negative electrode active material layer including a negative electrode active material and a binder,
the negative electrode active material includes a carbon-based material and metal particles,
the binder includes a first polymer of a butadiene rubber, and a second polymer selected from carboxy alkyl cellulose (wherein alkyl is a C1 to C6 alkyl), a salt thereof, and a combination thereof, and
the first polymer and the second polymer are included in a weight ratio of 1:1 to 6:1.

2. The all-solid-state battery of claim 1, wherein
the metal particles are any one selected from Ag, Zn, Al, Sn, Mg, Ge, Cu, In, Ni, Bi, Au, Si, Pt, Pd, or a combination thereof.

3. The all-solid-state battery of claim 1 or 2, wherein
the metal particles have a size of 5 nm to 800 nm.

4. The all-solid-state battery of any one of claims 1 to 3, wherein
the carbon-based material is non-graphitic carbon.

5. The all-solid-state battery of claim 4, wherein
the non-graphitic carbon has a secondary particle form in which a plurality of primary particles are agglomerated.

6. The all-solid-state battery of claim 5, wherein
the primary particle has a particle diameter of 20 nm to 100 nm.

7. The all-solid-state battery of any one of claims 4 to 6, wherein
the non-graphitic carbon is any one selected from carbon black, activated carbon, acetylene black, denka black, ketjen black, and a combination thereof.

8. The all-solid-state battery of any one of claims 1 to 7, wherein
the binder is included in an amount of 0.01 to 40 parts by weight based on 100 parts by weight of the negative electrode active material.

9. The all-solid-state battery of any one of claims 1 to 8, wherein
the butadiene-based rubber is any one selected from a styrene butadiene rubber (SBR), a nitrile butadiene rubber (NBR), an acrylate butadiene rubber (ABR), a methacrylate butadiene rubber, an acrylonitrile-butadiene-styrene (ABS) rubber, a styrene-butadiene-styrene (SBS) rubber, and a combination thereof.

10. The all-solid-state battery of any one of claims 1 to 9, wherein
the solid electrolyte is a sulfide-based solid electrolyte.

11. The all-solid-state battery of claim 10, wherein
the solid electrolyte includes a solid electrolyte of LiₐM_{b}P_{c}S_{d}Aₑ (wherein a, b, c, d, and e are all 0 or more and 12 or less, M is Ge, Sn, Si, or a combination thereof, and A is one of F, Cl, Br, or I).

12. The all-solid-state battery of any one of claims 1 to 11, wherein
no solid electrolyte presents in the negative electrode.

13. The all-solid-state battery of any one of claims 1 to 12, wherein
the negative electrode has an electrode plate binding force of 10 gf/mm or more.

14. The all-solid-state battery of any one of claims 1 to 13, wherein
the negative electrode further includes a lithium precipitation layer formed by precipitating lithium between the negative electrode current collector and the negative electrode active material layer during charging.

15. The all-solid-state battery of claim 14, wherein
the lithium precipitation layer has a thickness of 10 µm to 50 µm.

16. The all-solid-state battery of any one of claims 1 to 15, wherein
the all-solid-state battery further includes a buffer material between the negative electrode and the case.
